# EUROPEAN PATENT SPECIFICATION

(11) **EP 2 007 605 B1**
(45) Date of publication and mention of the grant of the patent: **30.07.2014**
(21) Application number: 07754771.9
(22) Date of filing: 02.04.2007
(51) Int. Cl.: B60R 13/02

(54) **VEHICLE DECORATIVE TRIM**
FAHRZEUGVERKLEIDUNGSTEIL
GARNITURE DÉCORATIVE DE VÉHICULE

(30) Priority: 07.04.2006 US 790420 P
(43) Date of publication of application: 31.12.2008
(73) Proprietor: Johnson Controls Technology Company, Holland, MI 49423 (US)
(72) Inventor: DAVAGE, Steven, Hamilton, Michigan 49419 (US)
(74) Representative: Wolff, Felix
(86) International application number: PCT/US2007/008305
(87) International publication number: WO 2007/117463

(56) References cited:
- EP-A- 0 845 344
- EP-A2- 0 285 071
- EP-A2- 1 359 080
- WO-A-97/35700
- US-A1- 2004 183 279

## Description

### Cross-Reference to Related Applications

### Background

This disclosure relates to a decorative trim member for a vehicle interior, cf. US 2004/0183279 A1. The disclosure more specifically relates to a vehicle decorative trim member formed by reaction injection molding a urethane material against a decorative element such as metal, wood, leather, fabric, cork or other materials used for use in a vehicle interior.

It is known to provide for a decorative trim member that may be used for a vehicle interior. Such known decorative trim members may be manufactured by attaching a decorative element, such as aluminum, to a previously-molded, rigid plastic substrate by a crimping operation, a heat staking operation, fasteners, or other physical attachment technique. It is also known to manufacture such known decorative trim members by injection molding a plastic against the decorative trim. However, such known techniques are expensive to manufacture do not realize certain advantageous features (and/or combinations of features). For example, crimping, heat staking, and other attachment operations require tooling investment and additional quality inspections. An injection molded substrate will shrink away from the decorative element. In both cases, the trim element will be separated from the substrate. It is also know to use reaction injection molding of urethane as a foam for cushioning and as a show surface "skin". However, such materials and methods are not know to be used as a structural element that carries the trim piece to the vehicle.

To provide an inexpensive, reliable, and widely adaptable decorative trim member that avoids the above-referenced and other problems would represent a significant advance in the art.

### Summary of the invention

There is disclosed a method of forming a vehicle trim member comprising placing a decorative element into a mold; forming a substrate and bonding the substrate to the decorative element, and demolding the vehicle trim member. The step of forming the substrate comprises the steps of introducing a first liquid resin material (e.g., isocyanate) and a second liquid resin material (polyol) to a mixhead to form a mixed resin material and introducing the mixed resin material into a mold and against the decorative element. The decorative element may be formed from aluminum, metals, alloys, thermoplastic, thermoset, elastomer, wood, leather, or fabric.

There is also provided a vehicle trim member comprising a decorative element and a substrate coupled to the decorative element. The substrate is maintained in position by in-turned edges of the decorative element regarding both the method according to claim 1 and the vehicle trim member according to claim 9. The substrate can be composed of a urethane resin.

### Description of the Drawings

FIG. 1 is a perspective view of a vehicle interior including decorative trim members.

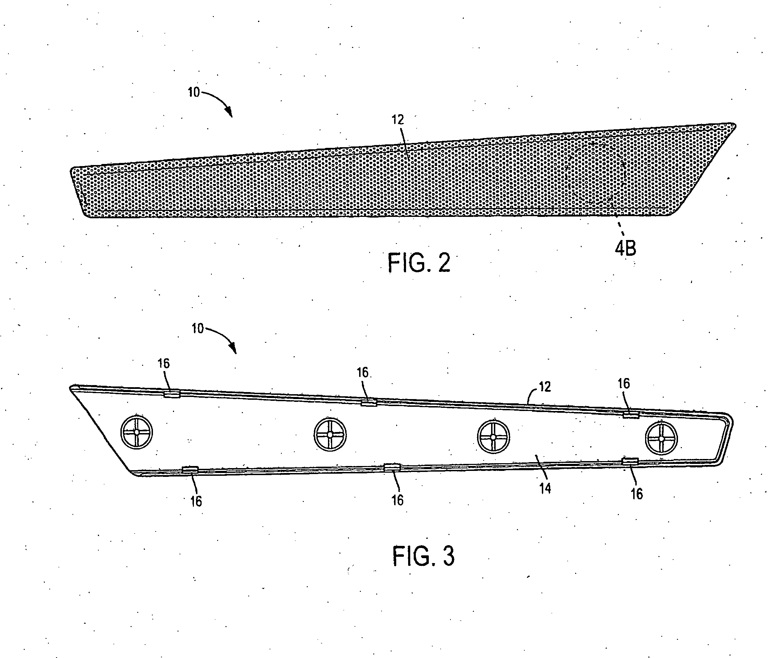

FIG. 2 is a top or front view of a decorative trim member according to an exemplary embodiment.
FIG. 3 is a bottom or rear/back view of the decorative trim member of FIG. 2.
FIG. 4A is a fragmentary view of the decorative trim member of FIG. 3.
FIG. 4B is a fragmentary view of the decorative trim member of FIG. 2.
FIG. 5 is schematic representation of an apparatus for manufacturing a decorative trim member using reaction injection molding according to an exemplary embodiment.
FIGS. 6A through 6D illustrate various process steps for manufacturing a decorative trim member using reaction injection molding according to an exemplary embodiment.
FIG. 7 is a schematic process flow diagram of a method of making the decorative trim member according to an exemplary embodiment.

### Detailed Description

Before explaining a number of exemplary and alternative embodiments of the vehicle decorative trims in detail it is to be understood that this disclosure is not limited to the details of construction and the arrangement of the components set forth in the following description or illustrated in the drawings. The decorative trim is capable of other embodiments or being practiced or carried out in various ways. It is also to be understood that the phraseology and terminology employed herein is for the purpose of description and should not be regarded as limiting. For example, while the components of the disclosed embodiments will be illustrated as a vehicle trim member designed for a door, the features of the disclosed embodiments have a much wider applicability. For example, the vehicle trim member design is adaptable for other instances where a decorative element is to be added to another structure such as in any of a variety of commercial, industrial, office, home, or educational environments. Further, the size of the various components and the size of the decorative trim member can be widely varied. Also, it is important to note that the term "decorative," "trim," and "substrate" are intended to be broad terms and not terms of limitation. These components may be used with any of a variety of products or arrangements and are not intended to be limited to use with vehicle applications.

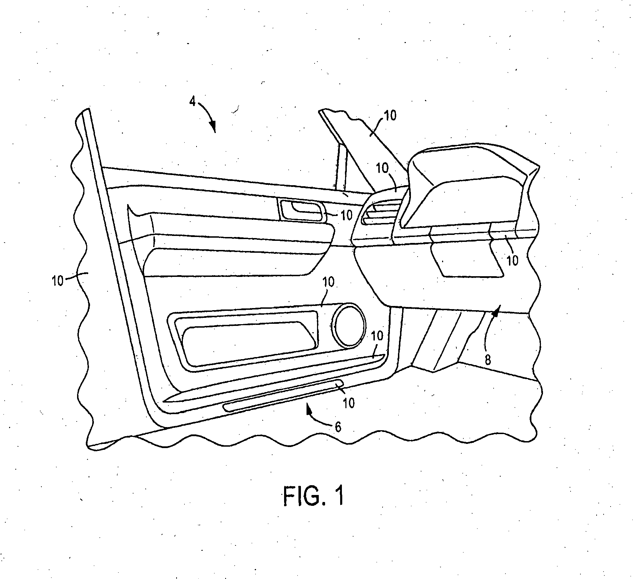

Referring to FIG. 1, a vehicle interior 4 is shown with a door 6 and a partial instrument panel 8. The door and the instrument panel each include a decorative trim member 10 coupled to the structural portion of the door or the instrument panel. The door and instrument panel are shown by way of example and not limitation. A person having ordinary skill in the art reviewing this disclosure would appreciate that the decorative trim member may be mounted at any of a variety areas within a vehicle interior besides the door and instrument panel, including but not limited to an overhead system, visors, pillars, cargo areas, seating, consoles, and the like. The decorative trim member generally includes at least a decorative element 12, a substrate 14, and mounting tabs 16.

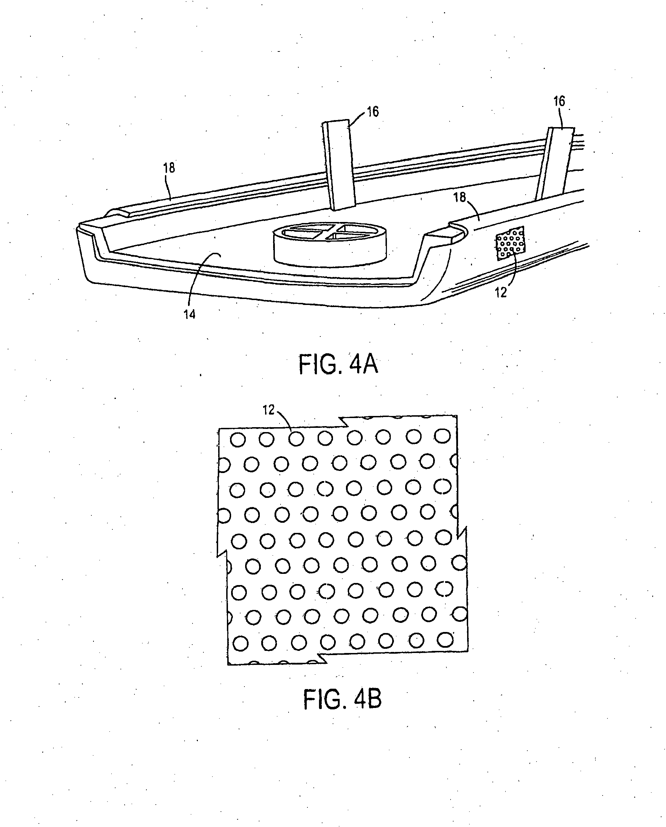

The decorative element 12 generally comprises a shell body with in-turned edges 18 (See Fig. 4A). The in-turned edges 18 may be at approximately 90 degree angle relative to the adjacent portion of the shell body. Alternatively, the in-turned edges may be any of a variety of angles relative to the adjacent portion of the shell body and may depend on tooling feasibility and the desire of the producer to eliminate bonding requirements. The in-turned edges are not necessary in every embodiment, but when include so that a mechanically locking condition is created between the cured substrate and trim, then any adhesion requirements between the substrate and trim are removed and/or minimized.

According to a preferred embodiment shown in FIGS. 4A and 4B, decorative element 12 comprises a plurality of apertures (e.g., holes, openings, etc.). Aluminum is the preferred material for making the decorative element. However, other materials can be used, including thermoplastic, thermoset, elastomer, metal, wood, leather, fabric, or any of a variety of other materials desirable for use as a decorative element.

The decorative element 12 is coupled to the substrate 14 across substantially its entire surface and/or by being molded with the in-turned edges 18 of the decorative element 12 (e.g., captured, detained, confined, encapsulated, restrained, held, secured, etc.). According to an exemplary embodiment as shown in FIGS. 4A and 4B, plastic material used for the substrate 14 forms a mechanical bond with at least a portion of the plurality of apertures on the decorative element 12.

The mounting tabs 16 are insert molded and provide a structure for mounting of the decorative trim member 10 to the door, instrument panel, overhead system, other vehicle interior, etc. According to an exemplary embodiment, the mounting tabs 16 are metal, but could be any of a variety of materials in alternative embodiments (e.g., plastic, etc.). The mounting tabs 16 may be "L" shaped, "U" shaped, curved, arcuate, linear, or any of a variety of shapes and configurations according to the desired mounting and mating arrangement.

According to an exemplary embodiment, the substrate 14 is a structural member and is formed by a plastic material. According to a preferred embodiment, the substrate 14 is formed by reaction injection molding (RIM) operation. RIM is the preferred method of forming substrate because it injects at a lower pressure and at a lower temperature, is less expensive tooling, is adaptable for insert tooling (e.g., the mounting tabs), and uses less expensive materials than injection molding. Also, an injection molded substrate may detach from the decorative element 12 due to shrinkage of the plastic as it cools and solidifies, which may cause buzz, squeak, or rattle of the decorative trim member 10. According to a particularly preferred embodiment, the substrate 14 comprises reacted polyurethane or PUR formed from pre-polymer urethane resin. Unlike known RIM urethane applications (which use the urethane as a foam for cushioning and as a show surface "skin") RIM urethane form the structural element that carries the trim piece to the vehicle. According to alternative embodiments, the substrate 14 comprises other urethane resins and systems for RIM.

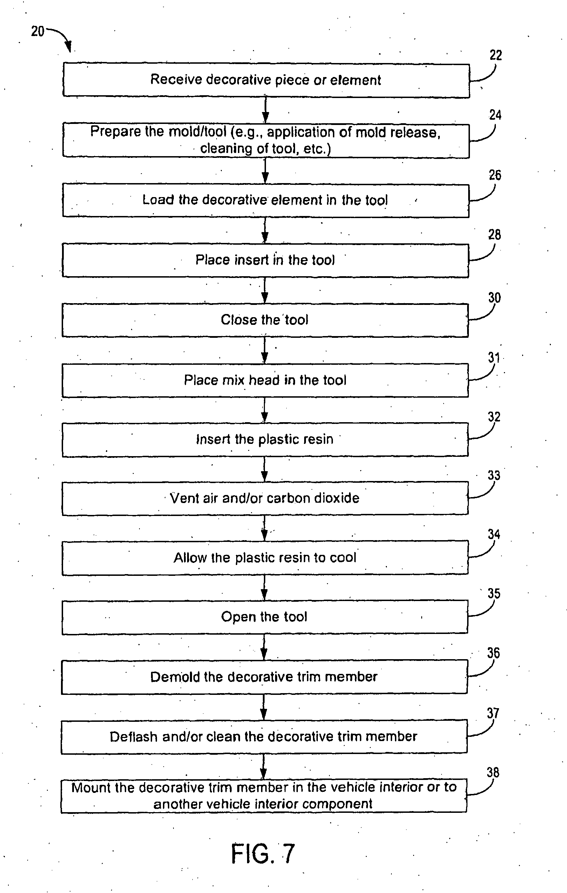

FIGURE 7 shows a method 20 of forming a decorative trim member 10 according to a preferred embodiment. In this process, the decorative piece or element 12 (e.g., metal, wood, leather, etc.) is received (step 22) and the tool is prepared (e.g., application of mold release, cleaning of tool, etc.) (step 24). The decorative element 12 is loaded in the tool (step 26). An insert such as mounting tabs 16 may also be placed in the tool (step 28). The tool is closed (step 30) and the mix head is placed in tool (step 31) if necessary. Alternatively, the tool is closed after the urethane is injected (i.e., "open pour" process). The plastic resin (e.g., PUR) is then injected (step 32) to form the substrate 14 and air and/or carbon dioxide is vented from the mold tool (step 33). The plastic resin is allowed to cure (partially or completely) (step 34), the tool is opened (step 35), and the decorative trim member 10 is removed/demolded (step 36). If necessary, the decorative trim member 10 is deflashed and/or cleaned (step 37). The decorative trim member may then be mounted or assembled in the vehicle interior or attached to another vehicle interior component (step 38) using the mounting tabs 16 if provided.

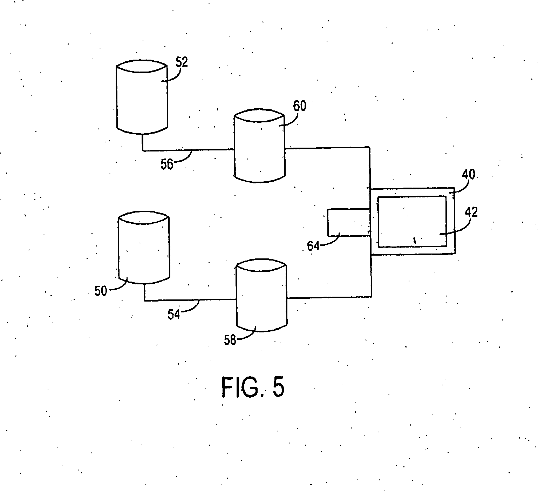

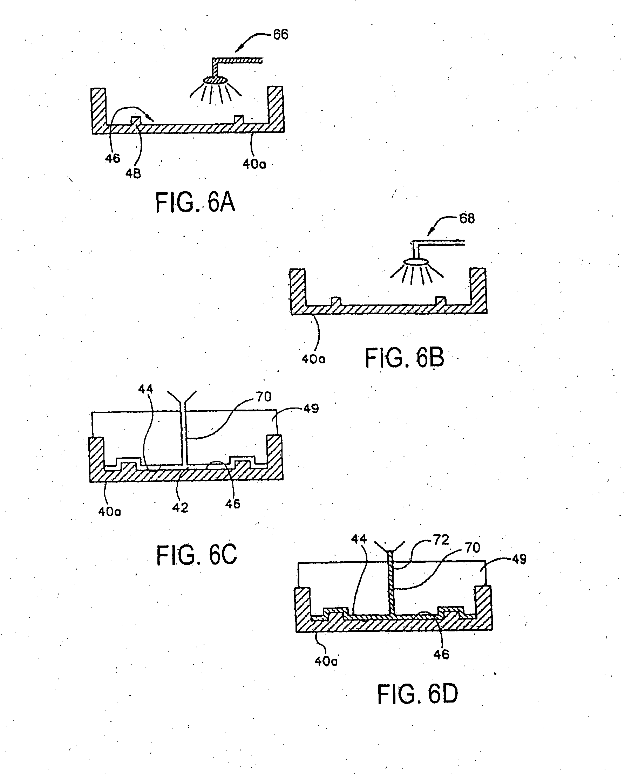

FIGURES 5 and 6A through 6D are schematic illustrations of a process for manufacturing the decorative trim member 10. According to a preferred embodiment, a reaction injection molding ("RIM") process for forming decorative trim member 10 is shown according to an exemplary embodiment. It is preferred to use a RIM process for control of the wall thicknesses of the edges and boss projections. As shown in FIGURE 5, a mold 40 having a cavity 42 is provided to receive the injected components used to form decorative trim member 10 (e.g., the substrate). As illustrated in Fig. 6A, mold 40a comprises an interior or mold surface 46 (e.g., cavity side) which is configured to couple to a core surface 44 of core 49 in a sealing relation to define a cavity 42 (See Fig. 6C). According to an exemplary embodiment, core surface 44 comprises an (indented) profile 48 having the shape of projections (See Fig. 6A). Recesses 45 in profile 48 form the desired contour in the substrate 14 (e.g., structural members, ribs, bosses, etc.). Core 49 (including core surface 44, profile 48, and recesses 45) defines the surface configuration and overall shape of decorative trim member 10 as the material injected into mold cavity 42 takes shape as defined by profile 48 and surface 44. For illustrative purposes, an exemplary embodiment of profile 48 of core surface 44 is shown in FIGURE 6A. Unlike known RIM urethane applications (which use the urethane as a foam for cushioning and as a show surface "skin") RIM urethane form the structural element that carries the trim piece to the vehicle.

The RIM process uses polyurethanes to produce molded parts. The polyurethanes begin as two liquid components - isocyanate and polyol. The isocyanate material may be either an aromatic material (generally not light stable) or an aliphatic material (generally light stable), or a combination of aromatic and aliphatic materials. When using an aromatic material, a paint or other covering may be applied for protection from light. In exemplary embodiments, depending on how the polyurethane RIM system is formulated, the parts molded with it can be a foam or a solid, and they can vary from flexible to extremely rigid.

The RIM process is a chemical reaction between the two liquid components, which are held in separate, temperature-controlled feed tanks 50, 52 as shown in FIGURE 5. Referring to FIGURE 5, the isocyanate and polyol are fed from these tanks 50, 52 through separate supply lines 54, 56 to a metering devices 58, 60 into a mixhead 64. According to an exemplary embodiment, when injection of the liquids into mold 40 begins, the valves of the mixhead 64 open. The liquid reactants enter a chamber in mixhead 64 at a predetermined pressure (e.g., lower than 3,000 psi) and are mixed by high-velocity impingement. From the mix chamber, the liquid flows into the mold 40 at approximately atmospheric pressure. Inside the mold 40, the liquid undergoes an exothermic chemical reaction which forms the polyurethane polymer in mold 40. According to various exemplary embodiments, cycle times vary depending on the part sizes and reaction conditions. In many cases, mold 40 may be injected with material and cured within about ninety seconds. Demolding then follows.

FIGURES 6A through 6D show how the mold is formed in the cavity in greater detail. Referring to FIGURE 6A, a release spray 66 is applied in and/or to cavity 40a. As shown in FIGURE 6A, release spray 66 is applied to mold surface 46. Release spray 66 is intended to facilitate the removal of the decorative trim member from the mold after demolding. Referring to FIGURE 6B, a paint spray 68 may be applied in and/or to cavity 40a. As shown in FIGURE 6B, paint spray 68 may also be applied to mold surface 46. Paint spray 68 provides light stability for aromatic based material (isocynate) as well as an appropriate color and appearance characteristics for the finished product (e.g., decorative trim member) in certain embodiments (not shown). Release spray 66 and/or paint spray 68 may be applied either manually or by a spray apparatus. According to various alternative embodiments, the release spray and/or paint spray are not applied in and/or to the cavity. Referring to FIGURE 6C, core 49 is positioned over mold 40a to form cavity 42 between mold surface 46 and core surface 44. An injection region or portion 70 is provided through core 49 to allow for the injection of material 72 into cavity 42. Referring to FIGURE 6D, material 72 is injected into cavity 42 between core surface 44 of core 49 and mold surface 46 of mold 40a. According to an exemplary embodiment, injected material 72 is injected at an angle in the range of about 80 to 100 degrees relative to mold surface 46. According to a preferred embodiment, injected material 72 is injected at approximately a 90 degree angle with respect to cavity 40a. After being injected into cavity 42, injected material 72 is cured and demolded after a period of time that depends on a number of factors such as temperature, component material characteristics, etc. According to an exemplary embodiment, injected material 72 is cured and demolded at a temperature above 100 degrees F. According to various exemplary embodiments, the cavity surface (for forming the A-surface) and the core surface (for forming the B-surface) may comprise nickel shell (e.g., electroplated, nickel vapor deposition, etc.), steel (machined, etc.), aluminum (machines, cast, etc.), spray metal alloys, etc. According to alternative embodiments, tool materials may be "soft", such as silicone, for use in low volume applications.

It is also important to note that the construction and arrangement of the elements of the decorative trim member as shown in the preferred and other exemplary embodiments is illustrative only. Although only a few embodiments of the present vehicle decorative trim have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements show as multiple parts may be integrally formed, the operation of the interfaces may be reversed or otherwise varied, the length or width of the structures and/or members or connector or other elements of the system may be varied, the nature or number of adjustment positions provided between the elements may be varied (e.g. by variations in the number of engagement slots or size of the engagement slots or type of engagement). It should be noted that the elements and/or assemblies of the system may be constructed from any of a wide variety of materials that provide sufficient strength or durability, in any of a wide variety of colors, textures and combinations. Accordingly, all such modifications are intended to be included. Other substitutions, modifications, changes and omissions may be made in the design, operating conditions and arrangement of the preferred and other exemplary embodiments without departing from the scope of the present invention defined by independent claims 1 and 9.

## Claims

1. A method of forming a vehicle trim member (10) comprising:
placing a decorative element (12) into a mold,
forming a substrate (14) and bonding the substrate to the decorative element by:
introducing a first liquid resin material and a second liquid resin material to a mixhead to form a mixed resin material; and
introducing the mixed resin material into a mold and against the decorative element; the decorative element is provided as an element having in-turned edges (18) retaining the substrate in place which is captured by the in-turned edges (18) on the decorative element and
demolding the vehicle trim member.

2. The method of claim 1, wherein the first liquid resin material is isocyanate.

3. The method of claim 2, wherein the second liquid resin material is polyol.

4. The method of claim 1, wherein the substrate is a urethane resin.

5. The method of claim 4, wherein the process comprises a reaction injection molding process.

6. The method of claim 1, further comprising adding mounting tabs (16) to the mold before introducing the mixed resin material.

7. The method of claim 1, wherein the decorative element is selected from a group comprising at least one of or combinations thereof aluminum, metals, alloys, thermoplastic, thermoset, elastomer, metal, wood, leather, or fabric.

8. The method of claim 1, wherein the substrate is retained in place by being bonded to the decorative element.

9. A vehicle trim member (10) comprising:
a decorative element (12); and
a substrate (14) coupled to the decorative element,
**characterized in,**
**that** the substrate is maintained in position by in-turned edges (18) of the decorative element.

10. The vehicle trim member of claim 9 wherein the substrate is composed of resin material.

11. The vehicle trim member of claim 10 wherein the resin material is urethane resin.

12. The vehicle trim member of claim 9, wherein the decorative element is selected from a group comprising at least one of aluminum, metals, alloys, thermoplastic, thermoset, elastomer, metal, wood, leather, fabric, and combinations of such material.

13. The vehicle trim member of claim 9, including mounting tabs (16) coupled to the decorative element and substrate.

## Patentansprüche

1. Verfahren zum Bilden eines Fahrzeugverkleidungselements (10), umfassend:
das Platzieren eines dekorativen Elements (12) in einer Form;
das Ausbilden eines Substrats (14) und das Verbinden des Substrats mit dem dekorativen Element durch:
Einführen eines ersten flüssigen Harzmaterials und eines zweiten flüssigen Harzmaterials an einen Mischkopf, um ein gemischtes Harzmaterial zu erzeugen; und
Einführen des gemischten Harzmaterials in eine Form und an das dekorative Element; wobei das dekorative Element als ein Element mit eingedrehten Kanten (18) vorgesehen ist, welches das Substrat an der Verwendungsposition hält, das durch die eingedrehten Kanten (18) an dem dekorativen Element erfasst wird; und
das Entformen des Fahrzeugverkleidungselements.

2. Verfahren nach Anspruch 1, wobei das erste flüssige Harzmaterial Isocyanat ist.

3. Verfahren nach Anspruch 2, wobei das zweite flüssige Harzmaterial Polyol ist.

4. Verfahren nach Anspruch 1, wobei das Substrat Urethanharz ist.

5. Verfahren nach Anspruch 4, wobei das Verfahren ein Reaktionsspritzgussverfahren umfasst.

6. Verfahren nach Anspruch 1, ferner umfassend das Hinzufügen von Befestigungsstreifen (16) zu der Form vordem Einführen des gemischten Harzmaterials.

7. Verfahren nach Anspruch 1, wobei das dekorative Element ausgewählt wird aus einer Gruppe bestehend aus mindestens einem oder Kombinationen folgender Materialien: Aluminium, Metalle, Legierungen, Thermoplaste, Duroplaste, Elastomere, Metall, Holz, Leder oder Stoff.

8. Verfahren nach Anspruch 1, wobei das Substrat durch die Verbindung mit dem dekorativen Element an der Verwendungsposition gehalten wird.

9. Fahrzeugverkleidungselement (10), umfassend:
ein dekoratives Element (12); und
ein Substrat (14), das mit dem dekorativen Element gekoppelt ist;
**dadurch gekennzeichnet, dass**
das Substrat durch eingedrehte Kanten (18) des dekorativen Elements an der Verwendungsposition gehalten wird.

10. Fahrzeugverkleidungselement nach Anspruch 9, wobei das Substrat aus Harzmaterial besteht.

11. Fahrzeugverkleidungselement nach Anspruch 10, wobei das Harzmaterial Urethanharz ist.

12. Fahrzeugverkleidungselement nach Anspruch 9, wobei das dekorative Element ausgewählt wird aus einer Gruppe, die mindestens eines der folgenden Materialien umfasst: Aluminium, Metalle, Legierungen, Thermoplaste, Duroplaste, Elastomere, Metall, Holz, Leder, Stoff und Kombinationen dieser Materialien.

13. Fahrzeugverkleidungselement nach Anspruch 9, das mit dem dekorativen Element und dem Substrat gekoppelte Befestigungsstreifen (16) aufweist.

## Revendications

1. Procédé pour former un élément de garniture de véhicule (10) comprenant les étapes consistant à :
placer un élément décoratif (12) dans un moule,
former un substrat (14) et coller le substrat sur l'élément décoratif par les étapes consistant à :
introduire un premier matériau de résine liquide et un second matériau de résine liquide dans une tête de mélange pour former un matériau de résine mélangé ; et
introduire le matériau de résine mélangé dans un moule et contre l'élément décoratif, l'élément décoratif étant fourni comme un élément ayant des bords à revers (18) retenant en place le substrat, qui est capturé par les bords à revers (18) sur l'élément décoratif ; et
démouler l'élément de garniture de véhicule.

2. Procédé selon la revendication 1, dans lequel le premier matériau de résine liquide est l'isocyanate.

3. Procédé selon la revendication 2, dans lequel le second matériau de résine liquide est le polyol.

4. Procédé selon la revendication 1, dans lequel le substrat est une résine uréthanne.

5. Procédé selon la revendication 4, dans lequel le procédé comprend un processus de moulage par injection à réaction.

6. Procédé selon la revendication 1, comprenant en outre l'étape consistant à ajouter des pattes de fixation (16) au moule avant l'introduction du matériau de résine mélangé.

7. Procédé selon la revendication 1, dans lequel l'élément décoratif est choisi dans un groupe comprenant au moins l'un parmi : aluminium, métaux, alliages, thermoplastique, thermodurcissable, élastomère, métal, bois, cuir ou tissu ou combinaisons de ceux-ci.

8. Procédé selon la revendication 1, dans lequel le substrat est maintenu en place en étant collé à l'élément décoratif.

9. Élément de garniture de véhicule (10), comprenant :
un élément décoratif (12) ; et
un substrat (14) accouplé à l'élément décoratif,
**caractérisé en ce que** le substrat est maintenu en position par des bords à revers (18) de l'élément décoratif.

10. Élément de garniture de véhicule selon la revendication 9, dans lequel le substrat est constitué d'un matériau de résine.

11. Élément de garniture de véhicule selon la revendication 10, dans lequel le matériau de résine est une résine uréthanne.

12. Élément de garniture de véhicule selon la revendication 9, dans lequel l'élément décoratif est choisi dans un groupe comprenant au moins l'un parmi : aluminium, métaux, alliages, thermoplastique, thermodurcissable, élastomère, métal, bois, cuir, tissu, et combinaisons de ces matériaux.

13. Élément de garniture de véhicule selon la revendication 9, comprenant des pattes de fixation (16) accouplées à l'élément décoratif et au substrat.
